# EUROPÄISCHE PATENTSCHRIFT

(11) **EP 1 042 850 B1**
(45) Veröffentlichungstag und Bekanntmachung des Hinweises auf die Patenterteilung: **14.11.2001**
(21) Anmeldenummer: 98963643.6
(22) Anmeldetag: 23.12.1998
(51) Int. Cl.: H02G 1/12

(54) **ABISOLIERVORRICHTUNG**
INSULATION STRIPPER
DISPOSITIF A DENUDER

(30) Priorität: 23.12.1997 CH 294697
(43) Veröffentlichungstag der Anmeldung: 11.10.2000
(73) Patentinhaber: Schleuniger Holding AG, 3608 Thun (CH)
(72) Erfinder: JIRI, Stepan, 7320 Sargans (CH)
(74) Vertreter: Rosenich, Paul
(86) Internationale Anmeldenummer: IB9802125
(87) Internationale Veröffentlichungsnummer: WO9934493

(56) Entgegenhaltungen:
- EP-A- 0 195 932
- US-A- 4 999 910

## Beschreibung

Die Erfindung betrifft eine Abisoliervorrichtung für das Abisolieren von Kabeln mit wenigstens ein-, vorzugsweise mehrlagigem Aufbau, z. B. Koaxialkabeln. Abisolierlängen- oder Schnitttiefeneinstellungen wurden bisher durch das Verstellen von Stellschrauben von Hand oder durch motorische Antriebe (Solenoide oder pneumatische oder elektrische Motore) vorgenommen.

Die bekannten Arten von Einstellmöglichkeiten haben jeweils deren spezifischen Vor- und Nachteile. Händisch eingestellte Stellschrauben erfordern menschlichen Aufwand beim Wechsel der Einstellungen, motorische Antriebe erfordern Fremdenergiezufuhr, präzise Steuerungen und vor allem auch Sensorsysteme zum Messen von Positionen.

Der Erfindung liegt als Aufgabe zugrunde, ein semiautomatisches System zu schaffen, bei dem auf elektronische oder pneumatische Steuerungen verzichtet werden kann und trotzdem mit grosser Wiederholgenauigkeit mehrstufige Abisoliervorgänge durchgeführt werden können. Als weitergehende Aufgabe sollen Änderungen im Abisoliervorgang - z.B. für unterschiedliche Kabel - einfach einstellbar sein.

Die gertellte Aufgabe wird erfindungsgemäß durch die Merkmale der Ansprüche 1 und 2 gelöst.

Gelöst wird die Aufgabe durch das erstmalige Verwenden einer mechanischen Schablone, die relativ zu Tastfühlern verschieblich ist und mehrere unterschiedliche - oder unterschiedlich einstellbare - Angriffstellen aufweist (für unterschiedliche Längen und/oder Tiefen im Zusammenhang mit einem Abisoliervorgang eines mehrstufig abzuisolierenden Kabels), wobei die Tastfühler unmittelbar mit den Antriebsorganen für die Messerund/oder Zentrier- und/oder Spannbacken kooperieren.

Es sind zwar schon Schablonen in der Materialbearbeitungstechnik bekannt, die haben jedoch meistens unterschiedliche Aufgaben (z.B. Kopierschablonen für Dreh- oder Fräsmaschinen) oder bieten keinen naheliegenden Hinweis zur Anwendung in der Kabelverarbeitung.

Im Zusammenhang mit Abisoliervorrichtungen wurde von der Firma Carpenter eine Maschine konzipiert, die an einem Revolver mittels von Hand zu betätigenden Stellschrauben einstellbare Anschläge aufweist und so für unterschiedliche Schnitttiefeneinstellung anwendbar ist. Der Aufbau von Carpenter erfordert jedoch einen elektronisch gesteuerten Antrieb für den Revolver, um den jeweiligen Anschlag in Position zu bringen. Damit ist diese Lösung technologisch gesehen nicht unterschiedlich von einer Lösung mit einem motorischen Stellantrieb, der auf einen Revolver verzichten kann und zudem noch die Möglichkeit hat elektronisch eine stufenlose Einstellung der Schnitttiefe zu ermöglichen. Immerhin benötigt die elektronische Ansteuerung des Revolvers auch eine Sensorik um die jeweilige aktuelle Einstellung des Revolvers zu erkennen.

Weiters ist bei dem erwähnten Carpenter Konzept keine semiautomatische Vorwählbarkeit der Abisolierlängeneinstellung vorgesehen. Eine herkömmliche, elektronische Ansteuerung von elektrischen Antrieben findet dort Anwendung. 1985 hat der Erfinder solche elektronischen Ansteuerungen entwickelt und dadurch einen Standard für heutige Koaxialabisoliermaschinen geschaffen. Gegenüber diesem Standard ist das erwähnte Carpenter Konzept eine Rückentwicklung, ohne dabei auf die Anwendung von elektronischen Steuerungen im Zusammenhang mit der Abisolierlängenund Schnitttiefeneinstellung verzichten zu können. Gerade dieses wird jedoch durch die vorliegende Erfindung gelöst, ohne dabei auf den quasi automatischen Ablauf der Schnitttiefenänderungen und Abisolierlängeneinstellungen für das mehrstufige Abisolierung zu verzichten.

Die Schablone kann starr und austauschbar sein oder beweglich und einstellbar, insbesondere am Kabel einstellbar, indem die Antriebsorgane für Messer-, Spann- und/oder Zentrierbacken als Tastfühler am Kabel eingesetzt werden und der mechanische Chip durch die Tastfühler zwischen den Organen und dem Chip eingestellt wird (verschiebbare bzw. verstellbare Schablonenstücke).

Besonders bevorzugt sind Schablonen, bei denen paarweise Einstellstufen für Längen- und Tiefeneinstellung angeordnet sind. Die Erfindung ist jedoch auf die paarweise Einstellbarkeit nicht eingeschränkt, vielmehr können beispielsweise für das Einstellen der Spannzangen auf bestimmte, im Zuge des Abisolierens gegebenenfalls variierenden, Aussendurchmesser eine dritte Reihe von Einstellstufen ermöglichen oder vorgesehen sein. Vorteilhaft ist bei der Schablonenlösung weiters, dass bei bestimmten Ausführungsformen die Schablonen ausgetauscht werden können, so dass beispielsweise mit einer bestimmten Kabelgarnitur eine bestimmte Schablone gegebenenfalls geliefert und angewendet wird und beim Wechsel des abzuisolierenden Kabels die Schablone auf eine andere Schablone gewechselt wird.

Erfindungsgemäss sind Lösungen vorgesehen, bei denen sowohl Längen- und Tiefeneinstellungen auf einer einzigen Schablone integriert sind, bei bestimmten Anwendungsfällen kann es jedoch auch sinnvoll sein, die Längen- und Tiefeninformationen an getrennten mechanischen Chips bzw. Schablonen zu integrieren. So sind z.B. einer Kabeltype eine Schablone für die unterschiedlichen Tiefen zugeordnet, während eine wechselbare Schablone für unterschiedliche Abzugslängen zum Einsatz gelangt.

Weitere Varianten und Detailideen sind in den abhängigen Ansprüchen angegeben bzw. unter Schutz gestellt. Weitere, z.T. auch erfinderische Ideen und Varianten dazu ergeben sich aus der Figurenbeschreibung.

Dabei zeigen:
Fig. 1 eine schematische Darstellung eines erfindungsgemässen Ausführungsbeispieles mit bereits fertig abisoliertem Koaxialkabel;
Fig. 1a ein Detail aus Fig. 1 in Draufsicht;
Fig. 2 den Aufbau nach Fig. 1 in der Grundstellung, in der ein abzuisolierendes Kabel eingeschoben wird;
Fig. 2a einen Ausschnitt aus Fig. 2 - entsprechend dem Ausschnitt der Fig. 1a - jedoch mit dem Einstellmechanismus für Durchmessereinstellung;
Fig. 3 die betriebsbereite Abisoliervorrichtung mit eingespanntem Kabel für die erste Abisolierstufe;
Fig. 4 denselben Aufbau, jedoch mit bereits zum Anschlag eingeschnittenen Messern;
Fig. 5 ein Detail der erfindungsmässen Schablone;
Fig. 6 eine Variante dazu mit einfacher Einstellbarkeit der Schablonenstufen.

Gleiche Bezugszeichen bedeuten gleiche Bauteile. Durch die dargestellten Figuren ist die Erfindung nicht eingeschränkt. Das Beispiel dient lediglich zur Illustration eines einfachen, handbetätigbaren Abisoliergerätes. Der Aufbau der Zentrierbakken und Messer ist beispielhaft. Auch können im Rahmen der Erfindung anstelle von rotierenden Messern stillstehende Messer und anstelle von rotierenden Zentrierbacken stillstehende Zentrierbacken vorgesehen sein.

In einer Frontwand 1 sind zwei parallele Führungsstangen 2 fest plaziert, an deren Enden rechts ein Handgriff 3 befestigt ist. An den Führungsstangen 2 gleiten frei ein Schlitten 4, der einen drehbaren Abisolierkopf 5 lagert. Der Abisolierkopf wird über eine Welle 6 und eine Zahnscheibe 7 und einen nicht dargestellten Motor - z.B. über ein Zahnritzel oder einen Zahnriemen - angetrieben.

Ein an sich bekannter (vgl. Schleuniger Maschinen z.B. vom Typ 207) Keil 8 steuert über Rollen Messerhebel 10, die im Abisolierkopf 5 schwenkgelagert sind. Er ist von einer Schubstange 9 gegen eine nicht dargestellte Druckfeder verschiebbar. Damit sind Messer 11, die am freien Ende der Messerhebel 10 befestigt sind, in Radialrichtung zum Kabel 13 verstellbar.

Unmittelbar neben den Messern 11 sind Zentrierbacken 12 plaziert und mit einem zweitem Keil an die Kabeloberfläche bringbar (vgl. EP-A1-195932).

An der Frontwand 1 links sind zwei parallele Lagerführungen 62 für koaxiale Spannbackenwellen 15 befestigt. Diese tragen links Spannbacken 14 und sind durch Rollen 16 an einem Rollenhebel 17 mittels Spreizkegel 21 an das Kabel spannbar. Die Spannkraft ist dabei mittels Stellmutter 19 über eine Druckfeder 20 einstellbar. Diese stützt die Stellmutter und eine, in die Stellmutter gedrehte, Spindel 18. Der Spreizkegel 21 ist fest mit der Spindel 18 und einem Griffstück 22 verbunden.

Der Schlitten 4 ist mit einer Führung 33 für eine als Speichermodul 34 ausgebildete Schablone ausgerüstet und trägt eine feste Führung für einen Drehbolzen 28.

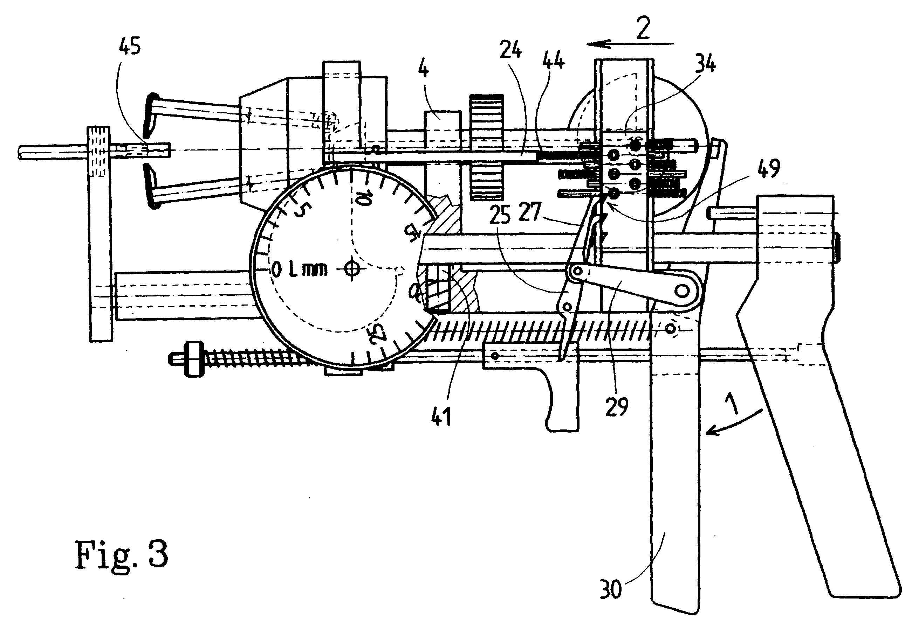

An dem Drehbolzen 28 ist einerseits ein Steuerhebel 30 und andererseits ein Vorschubhebel 29 befestigt. Der Vorschubhebel 29 trägt eine Vorschubklinge 27, welche mittels nicht dargestellter Feder gegen Vorschubzähne 49 des Speichermoduls 34 gedrückt gehalten ist (Fig. 3). Ein Riegelhebel 25 ist mittels Lagerstift 26 am Schlitten 4 befestigt und wie die Vorschubklinge 27 mittels nicht gezeigter Feder in Vorschubzähne 49 gedrückt gehalten.

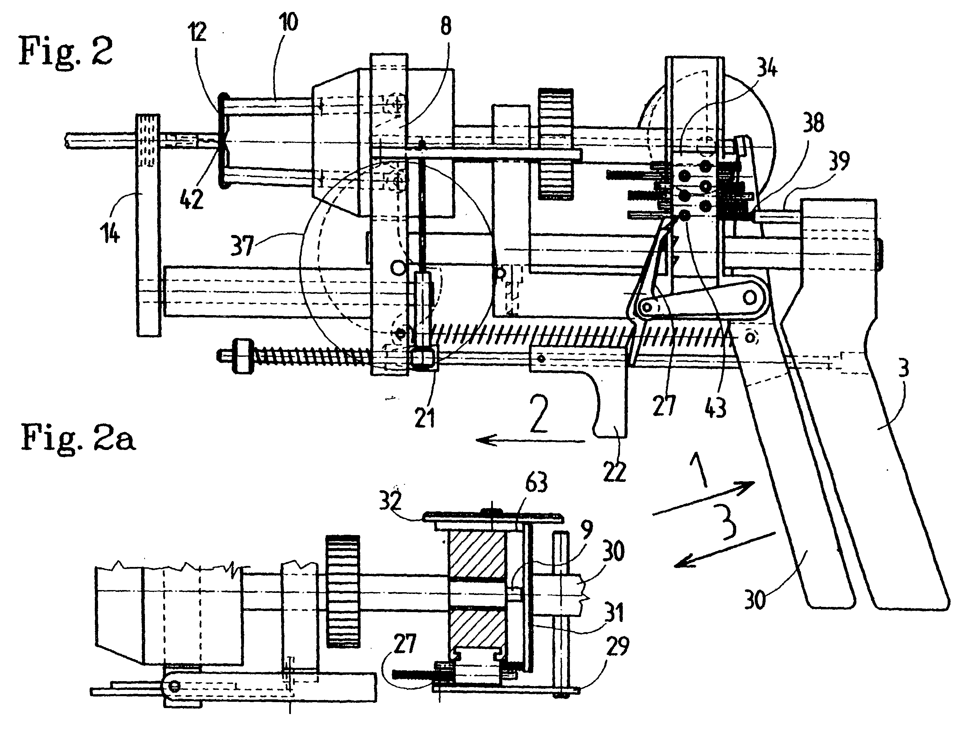

Eine in der Frontwand 1 befestigte Zugfeder 61 zieht den Schlitten 4 und den Steuerhebel 30 immer nach vorn in Richtung Abisolierkopf. Als Anschlag dient eine Gegenkante 31, die am Steuerhebel 30 ausgebildet ist. Sie stützt sich an einem Durchmesseranschlag 63 bzw. an einem Anschlagstift 36 des Speichermoduls 34 ab. (vgl. Fig. 2,2a).

Ein in der Frontplatte 1 schwenkbar gelagerter Anschlaghebel 24 begrenzt in seiner eingeschwenkten Stellung den Weg des Speichermoduls 34 und damit des Schlittens 4. Ist er ausgeschwenkt, gibt er den Weg des Speichermoduls frei bei seiner Bewegung in die Grundposition. Für schnelles Ermitteln (Einstellen) der Werte für Durchmesser und Länge sorgen Einstellskalen mit Stellspiralen 32 (Durchmesser),37 (Abisolierlänge).

Zur Funktionsweise:

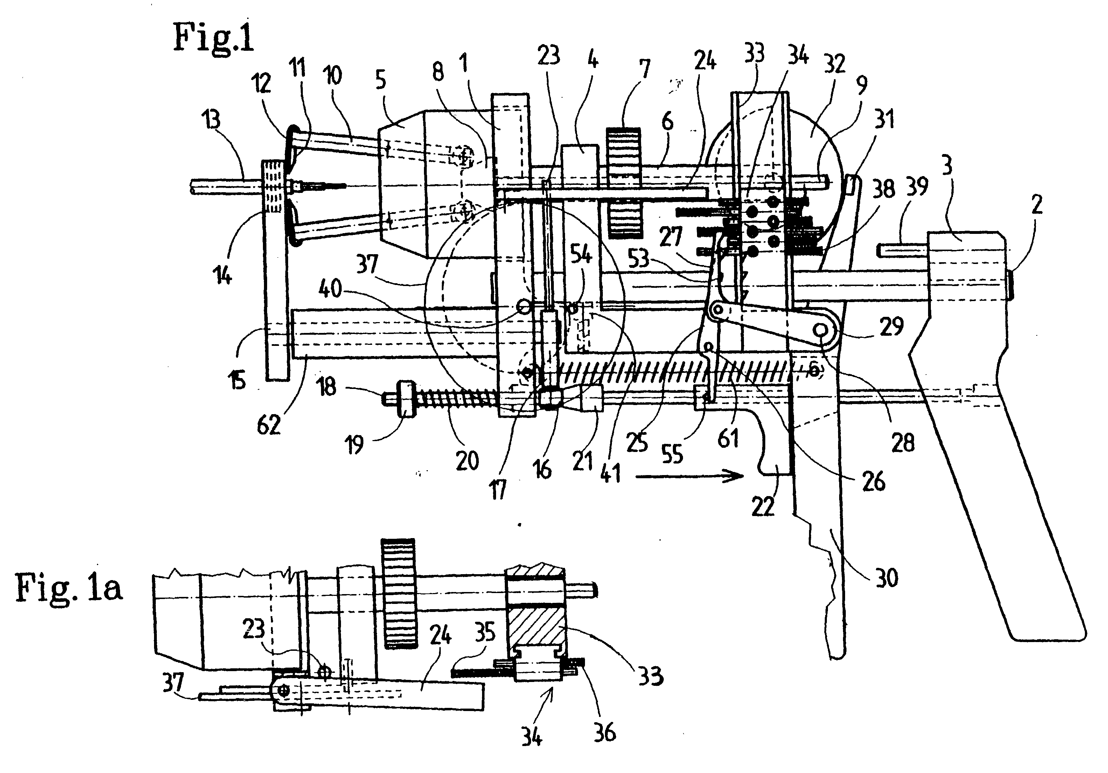

Fig. 1 zeigt die Abisoliervorrichtung im Moment, wenn der fertig abisolierte Leiter herausnehmbar ist. Das Griffstück 22 ist durch den Anwender gedrückt, die Spannbacken 14 geöffnet und das Speichermodul 34 in seiner untersten Position, da durch einen Mitnehmerstift 55 am Griffstück 22 der Riegelhebel 25 und die Vorschubklinge 27 aus den Vorschubzähnen 49 des Speichermoduls 34 abgehoben ist.

Fig. 1a zeigt das gleichzeitige Ausschwenken des Anschlaghebels 24 mittels Stift 23, der mit der Spannbackenwelle 15 verbunden ist. Dadurch gibt er den Weg für das Speichermodul 34 in seine Grundposition frei.

Das Speichermodul 34 kann dabei in seiner Grundposition federbelastet sein, nicht näher dargestellt. Für einen Anwender ist es jedoch auch möglich, das Speichermodul 34 durch Fingerdruck in seine Grundposition zu schieben.

In diesem Zustand kann auch die Stellspirale 37 für die Durchmessereinstellung betätigt werden.

Fig. 2 zeigt nun die Abisoliervorrichtung im Moment, wenn sie mit einem neuen abzuisolierenden Kabel bestückt wurde. Das Speichermodul 34 ist in seiner untersten Position, der Steuerhebel 30 gegen den Handgriff 3 gedrückt gehalten. Ein Anschlagstift 38 für die Begrenzung der Grundlänge ist gegen einen Gegenanschlag 39 angelegt, und die Messer 11 und Zentrierbacken 12 sind geschlossen. Die Zentrierbacken 12 dienen als Anschlag für das Ende des Kabels.. Durch Loslassen des Griffstückes 22 wird das Kabel 13 mittels Spannbacken 14 festgespannt.

Fig. 2a zeigt den Einstellvorgang des Durchmesseranschlages 63 bzw. der Stellspirale mit Skala 32 zur Durchmessereinstellung für den ersten Schritt.

Dabei ist es nicht erfindungswesentlich, ob die Zentrierbacken und Messer wie dargestellt angeordnet sind. Es könnten entsprechende Vorrichtungen auch ohne Zentrierbacken oder mit Zentrierbacken an der anderen Seite der Messer oder mit beidseitig angeordneten Zentrierbacken vorgesehen sein. Das dargestellte Ausführungsbeispiel ist lediglich guter Standard für herkömmliche Koaxialkabel. Die Erfindung ist jedoch auch nicht auf radialwirkende, selbst an sich starre Messer eingeschränkt, sondern könnte auch drehbare, z.B. scheibenförmige Messer anwenden. Bei nicht rotierenden Messern werden insbesondere Formmesser zur Anwendung gelangen. Im übrigen wird auch auf die EP-A1-297484 verwiesen, in der eine besondere Messervariante dargestellt ist, die im Rahmen der vorliegenden Erfindung auch angewandt werden könnte.

Fig. 3 zeigt die Abisoliervorrichtung im Moment vor dem ersten Schnitt. Das Speichermodul 34 stützt sich mit seinem Längsanschlag 44 gegen den Anschlaghebel 24 und begrenzt so die Abisolierlänge des ersten Teilstückes.

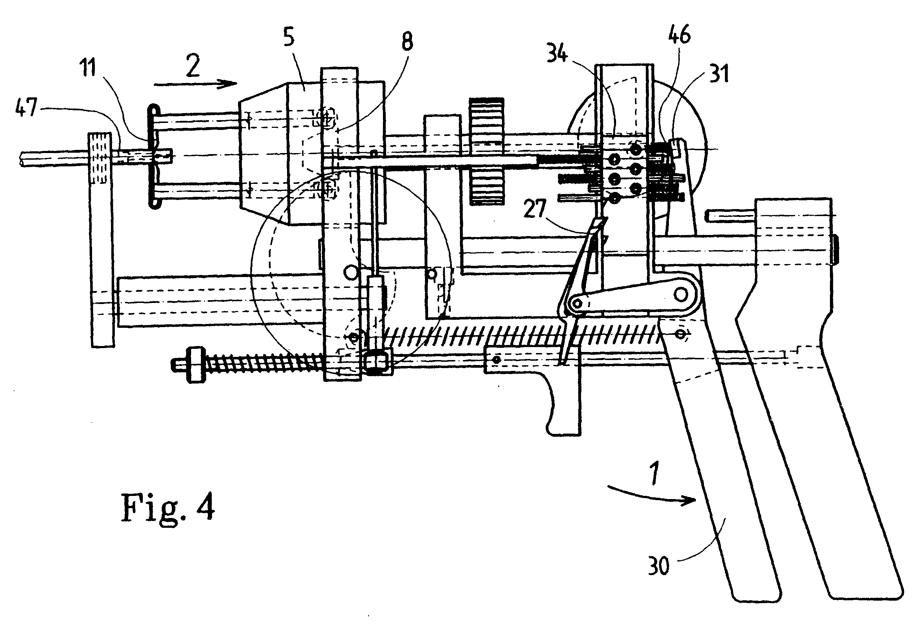

Fig. 4 zeigt die Abisoliervorrichtung im Moment, wenn die Messer 11 den ersten Schnitt durchgeführt haben. Die Anschlagkante 31 sitzt am Durchmesseranschlag 46 für die erste Schnitttiefe auf.(vgl. Fig. 1a)

Nicht dargestellt, aber dem Fachmann selbstverständlich, wird zwischen dem Stadium gemäss Fig. 3 und dem Stadium gemäss Fig. 4 der motorische Antrieb den Abisolierkopf 5 in Rotation versetzen.

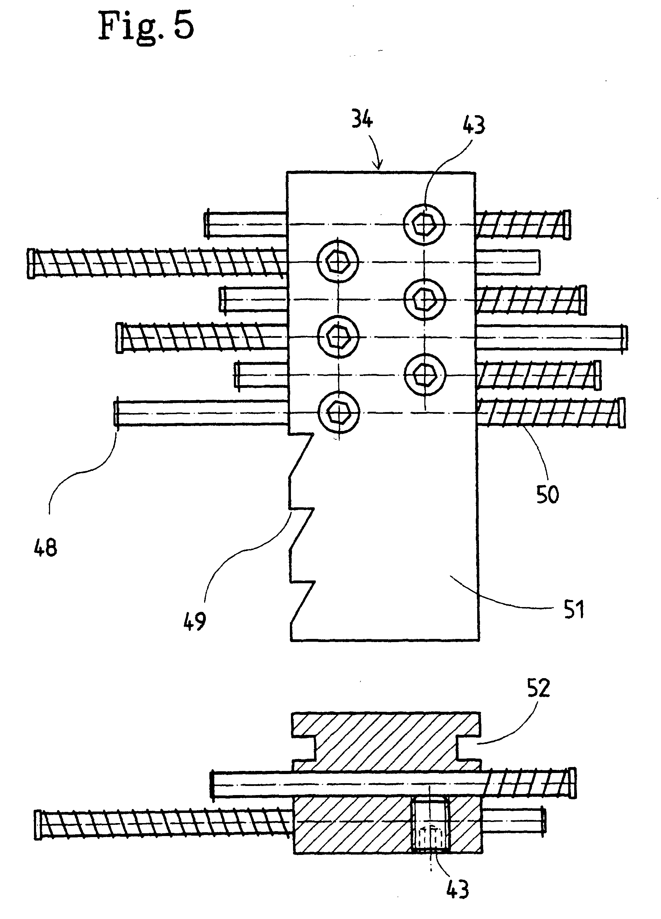

Fig. 5 zeigt eine besondere Ausführung des Speichermoduls 34 mit verstellbaren Anschlägen. Sie sind durch Gewindestifte 43 festklemmbar.

Derart ist ein erfindungsgemässes Speichermodul geschaffen, dass flexibel auf die entsprechenden Bedürfnisse der entsprechenden Kabel eingestellt werden kann. Wie schon erwähnt ist die Erfindung jedoch nicht auf einstellbare Speichermodule eingeschränkt, sondern umfasst durchaus auch fix vorgegebene (z.B. in Kunststoffspritzguss gefertigte) Speichermodule, die gegebenenfalls von der Kabelindustrie bereits mitgeliefert werden können. Geringfügige Justiermöglichkeiten ergeben sich, abgesehen vom Speichermodul selbst, noch durch - gegebenenfalls vorhandene jedoch nicht dargestellte - Einstellmöglichkeiten für die Tastfühler zwischen den Werkzeugen und dem Speichermodul. Ebenso sind gegebenenfalls - um Fertigungstoleranzen auszugleichen - die Abisoliermesser und Zentrierbacken in ihrer Lage justierbar.

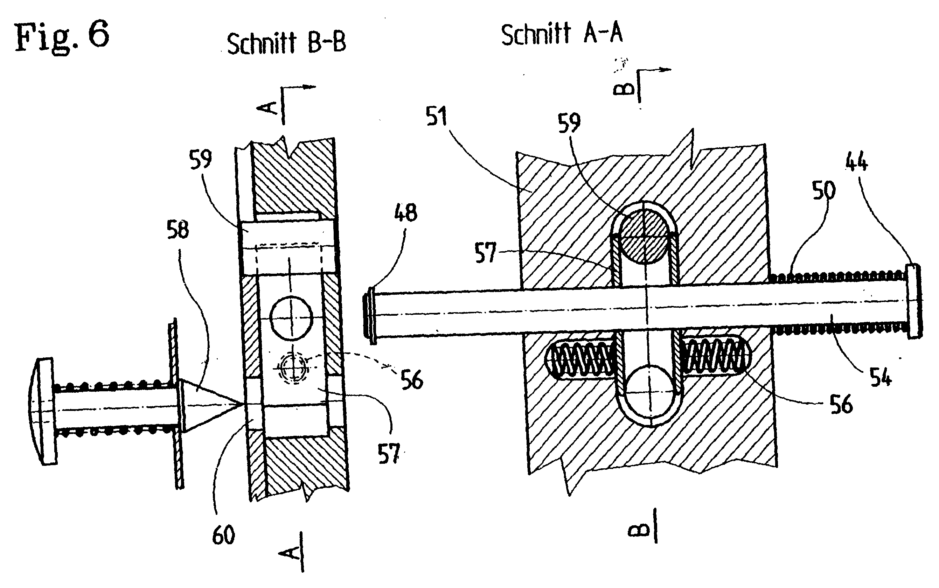

Eine andere besondere Ausführung des Speichermoduls ist in Fig. 6 dargestellt. Im Unterschied zu Fig. 5 sind dort die Anschläge nicht durch Gewindestifte festklemmbar, sondern durch eine selbstklemmende Klemmplattenkonstruktion. Die Anschlagstifte 54 durchsetzen je ein oder zwei Klemmplättchen 57, die z.B. aus Federstahl gefertigt sind. Die Bohrung in den Klemmplättchen hat dabei praktisch kein Spiel. Eine Druckfeder 50 stützt sich gegen den Körper 51 des Speichermoduls 34 und federbelastet den Anschlagstift 54 in Anschlagrichtung. Seine Anschlagfläche ist dabei verbreitert ausgebildet und dient so als Gegenanschlag für die Druckfeder 50. Klemmfedern 56 federbeaufschlagen einerends die Druckplättchen 57, so dass diese an ihrer Bohrung mit dem Anschlagstift 54 verkannten, leicht nach innen gebogen werden. Andererends sind die Klemmplättchen durch einen zylindrischen Stift in ihrer Position gespreizt gehalten.

Zum Lösen der Verkantungen der Klemmplättchen 57 am Anschlagstift 54 kann ein konischer oder kegeliger Stift 58 von Hand eingeschoben werden, der die Klemmplättchen 57 somit auch an dieser Seite gegen die Kraft der Federn 56 spreizt und dadurch den Anschlagstift 54 wieder frei beweglich macht. Ein Sicherungsring 48 sichert den Anschlagstift gegen Verlust. Der linke Figurenteil bezieht sich dabei auf einen Schnitt nach der Linie BB durch den rechten Figurenteil, der wiederum einen Schnitt durch den linken Figurenteil entlang der Schnittlinie AA darstellt.

Weitere erläuternde Informationen zu den Figuren ergeben sich aus der Bezugszeichenliste.

### Bezugszeichenliste

- 1.: Frontwand
- 2.: Führungsstangen
- 3.: Handgriff
- 4.: Schlitten
- 5.: Abisolierkopf
- 6.: Welle
- 7.: Zahnscheibe
- 8.: Keil
- 9.: Schubstange
- 10.: Messerhebel
- 11.: Messer
- 12.: Zentrierbacken
- 13.: Leiter zum Abisolieren
- 14.: Spannbacken
- 15.: Spannbackenwelle
- 16.: Rollen
- 17.: Rollenhebel
- 18.: Spindel
- 19.: Stellmutter
- 20.: Druckfeder
- 21.: Spreizkegel
- 22.: Griffstück
- 23.: Stift
- 24.: Anschlaghebel
- 25.: Riegelhebel
- 26.: Lagerstift
- 27.: Vorschubklinge
- 28.: Drehbolzen
- 29.: Vorschubhebel
- 30.: Steuerhebel
- 31.: Anschlagkante
- 32.: Stellspirale für Länge
- 33.: Führung
- 34.: Speichermodul
- 35.: Anschlagstift für Länge

## Patentansprüche

1. Abisoliervorrichtung für mehrlagige Kabel (13), mit auf mehrere Schnitttiefen einstellbare Abisoliermesser (11) und einer Folgesteuerung (8) für die Schnitttiefenverstellung, **dadurch gekennzeichnet, dass** der Folgesteuerung (8) ein erster Tastfühler (9,24,39) zugeordnet ist, der anderenends direkt oder indirekt an einer Schablone (34) abstützbar ist, die wenigstens zwei unterschiedliche Abstützstufen (35,36,38;44) aufweist, wobei die Schablone (34) relativ zum Tastfühler (9,24,39) so verstellbar ist, dass in Abfolge die eine und dann die andere Abstützstufe (35,36,38;44) zum Eingriff kommt.

2. Abisoliervorrichtung für mehrlagige Kabel (13), mit auf mehrere Abzugslängen einstellbare Abisoliermesser (11) und einer Folgesteuerung (8) für die Abzugslängenverstellung, **dadurch gekennzeichnet, dass** der Folgesteuerung (4,28,30) ein zweiter Tastfühler (24,39) zugeordnet ist, der anderenends direkt oder indirekt an einer Schablone (34) abstützbar ist, die wenigstens zwei unterschiedliche Abstützstufen (35,36,38;44) aufweist, wobei die Schablone (34) relativ zum Tastfühler (24,39) so verstellbar ist, dass in Abfolge die eine und dann die andere Abstützstufe (35,36,38;44) zum Eingriff kommt.

3. Abisoliervorrichtung nach Anspruch 1 und 2.

4. Abisoliervorrichtung nach Anspruch 3, **dadurch gekennzeichnet, dass** die Abstützstufen (35,36,38;44) für Schnitttiefe und Abzugslänge in einer gemeinsamen Schablone (34) integriert sind.

5. Abisoliervorrichtung nach Anspruch 3, **dadurch gekennzeichnet, dass** die Abstützstufen (35,36,38;44) für Schnitttiefe und Abzugslänge an je einer getrennten Schablone (34) ausgebildet sind.

6. Abisoliervorrichtung nach einem der vorhergehenden Ansprüche, **dadurch gekennzeichnet, dass** die Schablone einstückig ausgebildet ist, z.B. aus Metall gefräst und/oder in Kunststoffspritzguss gefertigt ist.

7. Abisoliervorrichtung nach einem der vorhergehenden Ansprüche, **dadurch gekennzeichnet, dass** die Abstützstufen (35,36,38;44)an - relativ zueinander verstellbaren - Anschlagelementen, insbesondere Anschlagstiften (54) ausgebildet sind.

8. Abisoliervorrichtung nach Anspruch 7, **dadurch gekennzeichnet, dass** die Anschlagstifte (54) gegenüber dem Schablonenkörper (51) mittels Schrauben (43) arretierbar sind.

9. Abisoliervorrichtung nach Anspruch 7, **dadurch gekennzeichnet, dass** die Anschlagstifte (54) durch zur Einstellung lösbare Federklemmelemente (57) arretierbar sind.

10. Abisoliervorrichtung nach einem der Ansprüche 7-9, **dadurch gekennzeichnet, dass** die Anschlagstifte 54 gegenüber dem Schablonenkörper in Anschlagrichtung federbelastet sind.

11. Abisoliervorrichtung nach einem der vorhergehenden Ansprüche, **dadurch gekennzeichnet, dass** die Relativverschiebung der Schablone (34) klinkengesteuert ist.

12. Abisoliervorrichtung nach einem der vorhergehenden Ansprüche, **dadurch gekennzeichnet, dass** wenigstens ein Tastfühler (24,39) ausschwenkbar ist, um die Wirkung der Schablone (34) aufzuheben und die Schablone rückzusetzen.

13. Abisoliervorrichtung nach einem der vorhergehenden Ansprüche, **dadurch gekennzeichnet, dass** Spannzangen für das radiale Fixieren des Kabels (13) vorgesehen sind, die kurvengesteuert gegen eine Zugfeder (61) mittels Griffstück (22) nach Art eines Abzughahns gesteuert sind und vorzugsweise mit dem ausschwenkbaren Tastfühler (24,39) gekoppelt sind.

14. Abisoliervorrichtung nach einem der vorhergehenden Ansprüche, **dadurch gekennzeichnet, dass** der Wirkungsbereich der Tastfühler über eine Spiralkurvensteuerung (32,37) mit Anzeige wählbar ist.

15. Abisoliervorrichtung nach einem der vorhergehenden Ansprüche, **dadurch gekennzeichnet, dass** sie in einem einhändig tragbaren Gehäuse mit Handgriff (3) integriert ist.

16. Abisoliervorrichtung nach einem der vorhergehenden Ansprüche, **dadurch gekennzeichnet, dass** die Abisoliermesser (11) an einem drehbaren Abisolierkopf (5) gehalten sind und durch einem Antrieb während des Einschneidens rotierbar sind.

## Claims

1. Insulation stripper for multilayer cables (13), comprising insulation stripping blades (11) adjustable to a plurality of cutting depths and a sequence control (8) for the cutting depth adjustment, **characterized in that** the sequence control (8) is assigned a first feeler (9, 24, 39) which can be supported at the other end directly or indirectly on a template (34) which has at least two different support steps (35, 36, 38; 44), the template (34) being adjustable relative to the feeler (9, 24, 39) so that one support step and then the other support step (35, 36, 38; 44) engage in sequence.

2. Insulation stripper for multilayer cables (13), comprising insulation stripping blades (11) adjustable to a plurality of stripping lengths and a sequence control (8) for the stripping length adjustment, **characterized in that** the sequence control (4, 28, 30) is assigned a second feeler (24, 39) which can supported at the other end directly or indirectly on a template (34) which has at least two different support steps (35, 36, 38; 44), the template (34) being adjustable relative to the feeler (24, 39) so that one support step and then the other support step (35, 36, 38; 44) engage in sequence.

3. Insulation stripper according to Claims 1 and 2.

4. Insulation stripper according to Claim 3,
**characterized in that** the support steps (35, 36, 38; 44) for cutting depth and stripping length are integrated in a common template (34).

5. Insulation stripper according to Claim 3,
**characterized in that** the support steps (35, 36, 38; 44) for cutting depth and stripping length are each formed on a separate template (34).

6. Insulation stripper according to any of the preceding Claims, **characterized in that** the template is formed in one piece, for example is milled from metal and/or produced by plastics injection moulding.

7. Insulation stripper according to any of the preceding Claims, **characterized in that** the support steps (35, 36, 38; 44) are formed on stop elements adjustable relative to one another, in particular stop pins (54).

8. Insulation stripper according to Claim 7,
**characterized in that** the stop pins (54) are lockable by means of screws (43) relative to the template body (51).

9. Insulation stripper according to Claim 7,
**characterized in that** the stop pins (54) are lockable by spring clamping elements (57) which can be released for adjustment.

10. Insulation stripper according to any of Claims 7-9, **characterized in that** the stop pins (54) are spring-loaded in the stop direction relative to the template body.

11. Insulation stripper according to any of the preceding Claims, **characterized in that** the relative displacement of the template (34) is ratchetcontrolled.

12. Insulation stripper according to any of the preceding Claims, **characterized in that** at least one feeler (24, 39) can be pivoted outwards in order to eliminate the effect of the template (34) and to reset the template.

13. Insulation stripper according to any of the preceding Claims, **characterized in that** chucks for radially fixing the cable (13) are provided, which chucks are cam-controlled against a tension spring (61) by means of grip (22) in the manner of a trigger valve and are preferably coupled to the feeler (24, 39) which can be swivelled out.

14. Insulation stripper according to any of the preceding Claims, **characterized in that** the range of action of the feelers can be selected by means of a spiral cam control (32, 37) having an indicator.

15. Insulation stripper according to any of the preceding Claims, **characterized in that** it is integrated in a housing capable of being carried in one hand and having a handle (3).

16. Insulation stripper according to any of the preceding Claims, **characterized in that** the insulation stripping blades (11) are held on a rotatable insulation stripping head (5) and are rotatable by means of a drive during incision.

## Revendications

1. Dispositif à dénuder pour des câbles à plusieurs couches (13), avec des couteaux à dénuder (11) réglables sur plusieurs profondeurs de coupe et une commande séquentielle (8) pour l'ajustement des profondeurs de coupe, **caractérisé en ce qu'**un premier palpeur (9, 24, 39) est associé à la commande séquentielle (8), lequel palpeur peut prendre appui, à l'autre extrémité, directement ou indirectement, sur un gabarit (34), qui comprend au moins deux échelons d'appui (35, 36, 38; 44), le gabarit (34) étant ajustable par rapport au palpeur (9, 24, 39) de telle façon qu'il vient successivement en prise avec l'un des échelons d'appui (35, 36, 38; 44) puis avec l'autre.

2. Dispositif à dénuder pour des câbles multicouches (13), avec des couteaux à dénuder (11) réglables sur plusieurs longueurs de retrait et une commande séquentielle (8) pour l'ajustement des longueurs de retrait, **caractérisé en ce qu'**un deuxième palpeur (24, 39) est associé à la commande séquentielle (4, 28, 30), lequel palpeur peut prendre appui, à l'autre extrémité, directement ou indirectement, sur un gabarit (34) qui comprend au moins deux échelons d'appui différents (35, 36, 38; 44), le gabarit (34) étant ajustable par rapport au palpeur (24, 39) de sorte qu'il vient successivement en prise avec l'un des échelons d'appui (35, 36, 38; 44), puis avec l'autre.

3. Dispositif à dénuder selon la revendication 1 et 2.

4. Dispositif à dénuder selon la revendication 3,
**caractérisé en ce que** les échelons d'appui (35, 36, 38; 44) pour les profondeurs de coupe et les longueurs de retrait sont intégrés dans un gabarit commun (34).

5. Dispositif à dénuder selon la revendication 3,
**caractérisé en ce que** les échelons d'appui (35, 36, 38; 44) pour les profondeurs de coupe et les longueurs de retrait sont formés sur chaque gabarit séparé (34).

6. Dispositif à dénuder selon l'une quelconque des revendications précédentes, **caractérisé en ce que** le gabarit est formé d'un seul tenant, par exemple usiné à partir de métal et/ou fabriqué en une matière plastique moulée par injection.

7. Dispositif à dénuder selon l'une quelconque des revendications précédentes, **caractérisé en ce que** les échelons d'appui (35, 36, 38; 44) sont formés sur des éléments de butée ajustables l'un par rapport à l'autre, en particulier des tiges de butée (54).

8. Dispositif à dénuder selon la revendication 7,
**caractérisé en ce que** les tiges de butée (54) peuvent être bloquées à l'aide de vis (43) en face du corps de gabarit (51).

9. Dispositif à dénuder selon la revendication 7,
**caractérisé en ce que** les tiges de butée (54) peuvent être bloquées par des éléments élastiques de serrage (57), que l'on peut desserrer pour le réglage.

10. Dispositif à dénuder selon l'une quelconque des revendications 7 à 9, **caractérisé en ce que** les tiges de butée (54) en face du corps de gabarit sont sollicitées élastiquement dans la direction de butée.

11. Dispositif à dénuder selon l'une quelconque des revendications précédentes, **caractérisé en ce que** le déplacement relatif du gabarit (34) est commandé par cliquet.

12. Dispositif à dénuder selon l'une quelconque des revendications précédentes, **caractérisé en ce qu'**au moins un palpeur (24, 39) est pivotable, afin de supprimer l'effet du gabarit (34) et de ramener le gabarit à la position initiale.

13. Dispositif à dénuder selon l'une quelconque des revendications précédentes, **caractérisé en ce que** des pinces de serrage sont prévues pour la fixation radiale du câble (13), qui sont commandées au moyen d'une pièce préhensible (22) commandée par came contre un ressort de traction (61) à la façon d'un robinet de vidange, et sont couplées de préférence avec le palpeur (24, 39) pivotable.

14. Dispositif à dénuder selon l'une quelconque des revendications précédentes, **caractérisé en ce que** la zone d'action du palpeur peut être sélectionnée par l'intermédiaire d'une commande à came en spirale (32, 37) avec indication.

15. Dispositif à dénuder selon l'une quelconque des revendications précédentes, **caractérisé en ce qu'**il est intégré dans un logement avec poignée (3), que l'on peut porter d'une main.

16. Dispositif à dénuder selon l'une des revendications précédentes, **caractérisé en ce que** les couteaux à dénuder (11) sont maintenus sur une tête à dénuder (5) rotative, et peuvent être tournés pendant la coupe au moyen d'un entraînement.
